Europäisches Patentamt

European Patent Office

Office européen des brevets

(11) Publication number: **0 250 878 B1**

# EUROPEAN PATENT SPECIFICATION

(45) Date of publication of patent specification: **09.12.92**

(51) Int. Cl.5: **B01D 53/34**

(21) Application number: **87107768.1**

(22) Date of filing: **27.05.87**

(54) **Method for reduction of sulfur products from flue gases by injection of powdered alkali sorbent at intermediate temperatures and apparatus therefor.**

(30) Priority: **29.05.86 US 868424**

(43) Date of publication of application:
**07.01.88 Bulletin 88/01**

(45) Publication of the grant of the patent:
**09.12.92 Bulletin 92/50**

(84) Designated Contracting States:
**AT DE IT**

(56) References cited:
**DE-A- 2 129 961
DE-A- 3 232 081
DE-A- 3 308 927
GB-A- 2 174 082
US-A- 4 178 349**

(73) Proprietor: **ELECTRIC POWER RESEARCH IN-STITUTE, INC
3412 Hillview Avenue
Palo Alto California 94303(US)**

(72) Inventor: **McElroy, Michael W.
1449 Ranchita Drive
Los Altos California 94022(US)**
Inventor: **Beittel, Roderick
4771 Sandpiper Lane
Birmingham Alabama 35244(US)**
Inventor: **Bortz, Steven J.
5 Sudbury Place
Laguna Niguel California 92677(US)**
Inventor: **Offen, George R.
450 Raymundo Drive
Woodside California 94062(US)**

(74) Representative: **WILHELMS, KILIAN & PART-NER Patentanwälte
Eduard-Schmid-Strasse 2
W-8000 München 90(DE)**

## Description

This invention was made with the support of the Electric Power Research Institute.

## BACKGROUND OF THE INVENTION

### Field of the Invention

The present invention is directed to a process for reducing the gaseous sulfur-containing products in the gases resulting from combustion of fossil fuels containing sulfur compounds, as well as from other manufacturing/chemical processes. In particular, the present invention is directed to reducing the gaseous sulfur-containing products in the gases by injecting dry powdered alkali hydrates into the gases at a location where their temperature is approximately 427° to 649°C (800° to 1200°F).

This invention is also directed to a combustion chamber for performing the process according to the present invention.

### Description of the prior art

The use of sulfur-bearing fuels in combustion installations (furnaces, burners, boilers, internal combustion reciprocating engines and turbines, and the like) results in the production of sulfur-containing compounds, in particular sulfur dioxide and lesser amounts of sulfur trioxide. Air pollution regulations in many political jurisdictions throughout the world require that these sulfurous constituents be removed from the exhaust gases prior to release into the atmosphere. Various chemical additives are known, including calcium carbonate (limestone), magnesium carbonate (dolomite), and the hydrates of each of these, which react with sulfur dioxide (and sulfur trioxide) in a manner which causes the sulfur compound to be sorbed on these particulate chemicals. It is also known that reactions producing these results can take place at temperatures between approximately 1260° and 871°C (2300° and 1600°F) as well as at temperatures below approximately 177°C (350°F). The specific reactions, however, are different in these two temperature regimes, and the reactions in the lower temperature regime (below 170°C (350°F)) are greatly enhanced by (1) the presence of water, and/or (2) cooling of the sulfur-containing gases to temperatures approaching their saturation point. The particles formed by the reactions in either temperature regime may be removed from the exhaust gases, with any particles formed during or remaining after combustion, by various means, such as filtration of the flue gases or electrostatic precipitation, and then discarded or recycled.

The efficiency of such a sulfur scrubbing process depends on numerous factors, especially the sorbent used and the temperature environment at, and immediately downstream of, the injection location. The amount of sulfur removed when injected into the higher temperature regime cited above is limited by (1) the rate competition between calcination/sulfation and sintering (disappearance of available reaction surface), and (2) the residence time of the combustion flue gases in the critical temperature window for sulfation (1260° to 871°C (2300° to 1600°F)). In many applications the residence time is too short to achieve more than 15 to 20 percent utilization of the sorbent. Such low utilizations make the economics marginally acceptable for many potential applications.

In addition, rapid, thorough mixing of the injected sorbent with the combustion flue gases is difficult to achieve, especially in large boilers. The most practical and reliable way of introducing the sorbent (particularly at elevated temperatures) is by injecting it through ports in the wall of the combustion volume (see U.S. Pat. No. 3,481,289); with this technique it is difficult to cause the sorbent to penetrate throughout the volume of a big boiler, and large quantities of transport air are required, decreasing the efficiency of the boiler. Attempts to overcome this mixing problem (see U.S. Pat. Nos. 3,746,498 on premixing the sorbent with the coal prior to introducing them together through the burner; 4,331,638 on injecting the sorbent with the secondary air around the burner; and 4,440,100 on introducing the sorbent below the burner [combustion] zone) result in deactivation of a substantial portion of the sorbent due to sintering caused by exposure to the high temperatures of the flame and furnace. A process that introduces the sorbent above the burner zone as an aqueous solution or slurry (see U.S. Pat. No. 4,555,996) may overcome the mixing and deactivation (sintering) problem, but increases the complexity of the system, by adding the equipment to prepare and transport the aqueous solution or slurry, and reduces the thermal efficiency of the boiler.

Effective capture of the sulfur compounds when injecting at or below 177°C (350°F) requires the development of a system for cooling and/or humidifying the gases without causing wet lime particles or other solid combustion byproducts (e.g., fly ash) to adhere to structures inside the duct or downstream particulate control device. This scheme may also require enlarged ducting to increase the residence time for vaporizing the water droplets (if water injection is used) and, possibly, replacement of the electrostatic precipitator (the most common particulate control system on boilers with no sulfur scrubber) with a baghouse filtration system to provide sufficient time for the reaction. Utilization efficiency of conventional calcitic hydrate sorbents is similar to that achieved by injecting into the higher temperature zone. Hence, the economics of this low temperature process may also be only marginally acceptable for many potential applications.

Therefore, there remains in the art the problem of finding a combination of sorbent, injection location, and injection methodology that (1) provides the correct temperature and residence time to favor a reaction which results in a higher utilization than that obtainable with the high and low temperature processes described above, (2) does not require a high level of humidification, and (3) facilitates the injection/mixing problem in large units.

Various methods have been proposed to attempt to deal with this problem. According to one proposed method, the sorbent is precalcined outside the boiler at conditions which are tailored to produce high specific surface areas and then injected into the combustion flue gases. Utilization was found to increase in proportion to the surface area produced during calcination when commercial sorbents were injected into the higher temperature region (1260° to 871°C (2300° to 1600°F)) of pilot-scale combustors. However, this approach failed to improve sorbent utilization significantly (i.e., by more than 2 to 4 percentage points in most cases) when very high area precalcined sorbents were injected into the higher temperature region. The negative effect of sintering, which depends approximately on the square of the surface area, is greater than the benefit of higher surface area. The technique is being investigated further for use in the lower temperature injection process, but requires that a water humidification system needed for that process be developed.

While the surface area of sorbents might be increased prior to injection by multiple hydration/dehydration steps and/or by hydrating in an ice bath in the presence of alcohol, the resulting sorbents would suffer from the same problem of sintering cited above for high temperature injection and, in any case, this approach may not be effective at lower temperatures.

According to a third known method, an additive such as an alkali metal compound (e.g., sodium), transition element (especially chromium), or iron compound is added to the alkali earth metal sorbent (calcium and/or magnesium carbonate or hydrate), and the mixture injected into the sulfur-containing combustion flue gases. The additive (e.g., an alkali metal) can be physically admixed in a dry state with the sorbent (calcium and/or magnesium compound) or, if the sorbent is a hydrate, incorporated into the hydrate by adding a water soluble compound of the additive to the water of hydration. However, the benefit of this approach, at least on a pilot combustor scale, ranges from none to at most four percentage points increase in sorbent utilization. In addition, many of these additives are expensive, may harm the boiler, and/or may be toxic when discharged into the environment.

It is, therefore, an object of the present invention to provide sorbents and means and methods of sorbent injection that improve the efficiency (speed of reaction and completeness of reaction) of the binding reaction with sulfur-containing gases.

SUMMARY OF THE INVENTION

Briefly, a method is provided for reducing the sulfur content of gas from a combustion installation comprising the step of injecting dry powder alkali hydrate sorbents directly into sulfur-containing gases such as, but not limited to, combustion gases, at temperatures in the range of about 427° to 649°C (800° to 1200°F). The alkali hydrate sorbent reacts rapidly with sulfur-containing gases in this intermediate temperature regime to produce alkali sulfites (and some carbonates, too). The unreacted portion of the sorbent will be largely in the form of an alkali hydrate and will react further with residual sulfur if the gases are cooled and/or humidified to within approximately 28°C (50°F) of their saturation temperature. The present invention further provides a novel combustion chamber having an injection means for injecting alkali hydrate sorbents into a combustion volume where the temperature is in the range of about 427° - 649°C (800° - 1200°F).

BRIEF DESCRIPTION OF THE DRAWINGS

The invention may be better understood and further advantages and uses thereof more readily apparent when considered in view of the following detailed description of exemplary embodiments, taken in conjunction with the accompanying drawings, in which:

Figure 1 is a graph of the percent $SO_2$ removal from combustion gases by a preferred sorbent (a pressure hydrated dolomite) when injected into a pilot-scale boiler simulator. The $SO_2$ removal rates are presented as a function of temperature, ranging from the highest experienced in the system (the temperature of sorbent injected with the fuel) to the saturation temperature of water. Of particular note is the peak in reactivity around 538°C (1,000°F), which phenomenon was discovered by the applicants and is exploited according to the teachings of the invention.

Figure 2 is an illustration of a combustion installation embodying the present invention.

Figure 3 is a graph of the temperature-time history of combustion flue gases in a typical large (600 MW) coal-fired boiler in the region surrounding the middle peak of the reactivity curve of Figure 1. On such a coal-fired utility boiler operating at a full load, this peak of reactivity occurs near the gas-side entry into the economizer tube banks. Figure 3 also presents the actual temperature-time history of the gases in the pilot-scale combustor used to demonstrate the present invention.

Figure 4A illustrates the results of tests conducted in a bench-scale, constant temperature laboratory combustor, showing the decomposition of a commercial calcium hydroxide into calcium oxide and the results of the reactions between the remaining calcium hydroxide and the carbon dioxide and sulfur dioxide in the combustion flue gases, all as a function of reactor temperature.

Figure 4B illustrates the results of tests conducted in a pilot-scale boiler simulator (with the temperature-time profile depicted in Figure 3) showing the amount of sulfur dioxide removed from the combustion flue gases by different sorbent materials injected at various temperatures.

Figure 5 is a schematic view of an embodiment of a combustion chamber according to the teachings of the invention applicable for use in an electrical utility.

Figure 6 is a schematic view of any controlled volume of gases which contains sulfur dioxide, where it is desirable to reduce or eliminate the sulfur dioxide according to the teachings of the invention.

## DESCRIPTION OF THE PREFERRED EMBODIMENTS

The present invention provides a process for reducing the sulfur content of gas from a combustion installation by injecting a calcitic, magnesium, or dolomitic hydrate (the "sorbent") in either dry powder form or an aqueous solution into the sulfur-containing gas stream such that the hydrate particles become exposed to the gas at a temperature between 427° and 649°C (800° and 1200°F), whereupon they are capable of reacting with sulfur compounds. The primary reactions of interest are between the hydrate and $SO_2$ to form, in the case of calcium hydrate, calcium sulfite ($CaSO_3$) and lesser amounts of calcium sulfate ($CaSO_4$). While not intending to be bound by a particular theory, it is believed that the improved sulfur capture obtained by injecting hydrates into this temperature regime is due, in part, to (1) the very fast reaction rate of $Ca(OH)_2$ and $SO_2$ at these temperatures, and (2) the formation of a sulfite rather than a sulfate, which is formed in the reaction at the higher temperature regime 871° to 1260°C (1,600° to 2,300°F). Sulfite occupies less of the pore volume liberated by the separation of the water molecule from the hydrate (or the carbon dioxide molecule from a limestone used at the higher temperatures) than does sulfate, thereby allowing more reaction product to accumulate in the pores of the sorbent before they become blocked and impede further reactions between the sorbent and the sulfur in the gas.

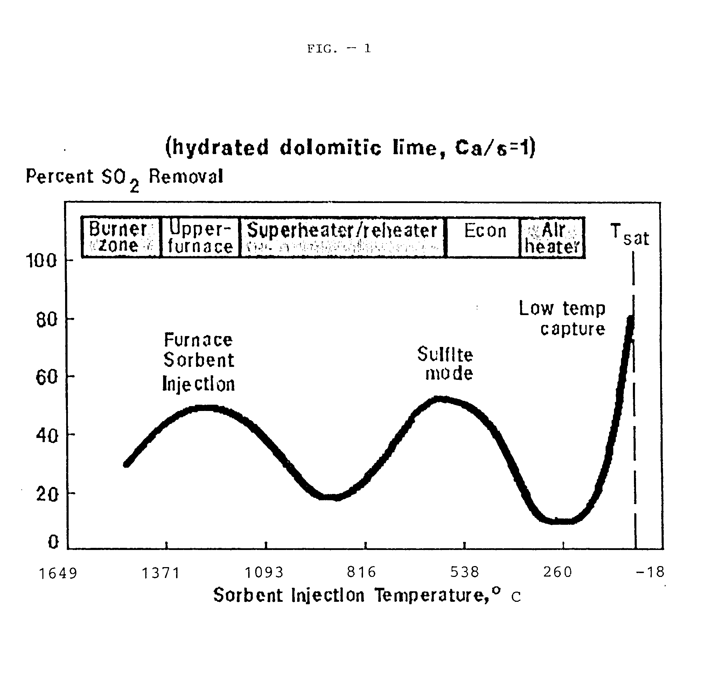

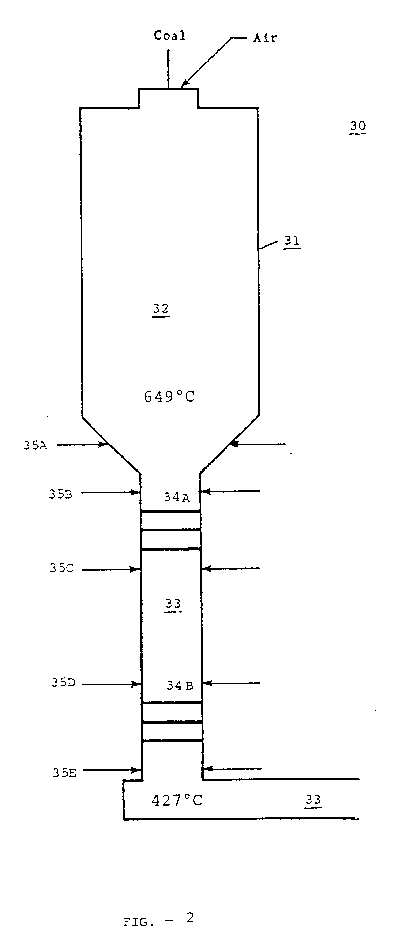

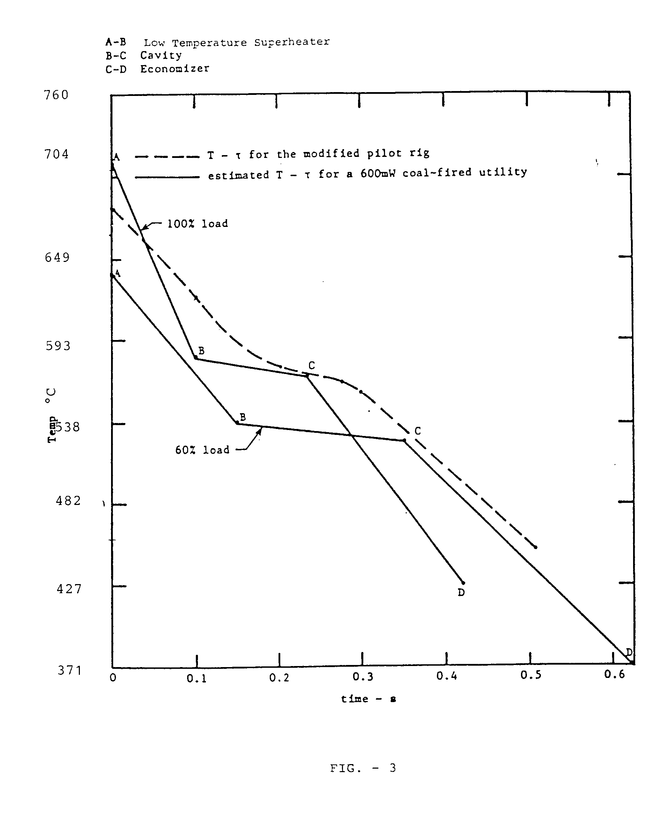

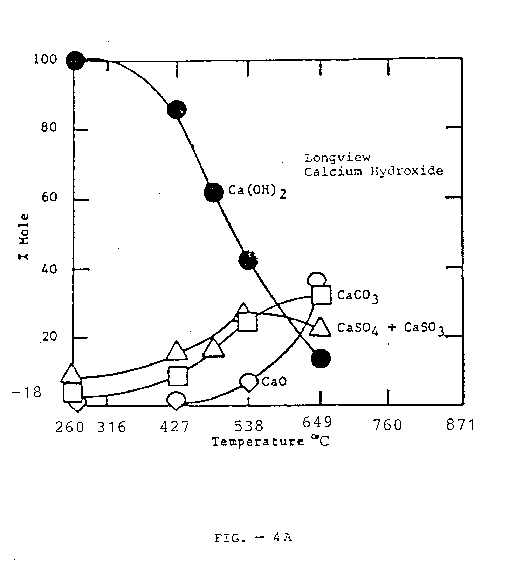

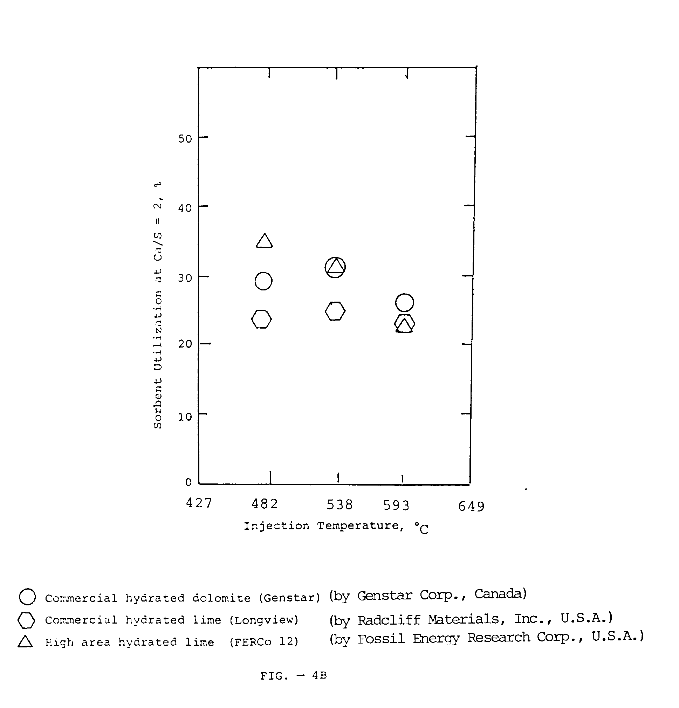

Within the range of approximately 427° to 649°C (800° to 1200°F), the optimum injection temperature (i.e., temperature of the combustion gases into which the sorbent is injected) and orientation of the injectors (e.g., coflowing, counterflowing, or crossflowing to the combustion gases) will depend upon the sorbent, temperature-time history of the gases downstream of the injection location, space constraints, if any, near the desired injection location, and, possibly, constituents of the gases. For example, when a preferred sorbent, hydrated dolomitic lime, was injected into a pilot combustor that simulates the thermal history of a utility boiler, the optimum injection temperature in the intermediate temperature regime was approximately 538°C (1,000°F) as shown in Figure 1. For a given application this optimum location and orientation can be determined by experimentation in a pilot-scale combustor designed to reproduce the temperature-time history of the gases in that particular application (see, for example, the installation depicted in Figure 2, in which the temperature-time histories depicted in Figure 3 for a typical 600MW coal-fired boiler are reproduced). Alternatively, the results shown in Figures 4A or 4B can be used in conjunction with knowledge of the specific temperature gradient and flows in the 427° to 649°C (800° to 1200°F) regime for the particular application to select the injection location and orientation.

Thus, Figure 4B shows that the optimum injection approach for a combustion installation with a 482°C (900°F)/s temperature decline rate following the injection location (the temperature decline rate shown in Figure 1 for the pilot combustor of Figure 2) and no physical obstacles at the injection location would be horizontally opposed injectors (as used in the installation depicted in Figure 2) located at approximately 538°C (1,000°F) for the Genstar or Longview sorbents and approximately 482°C (900°F) for the FERCo 12 sorbent. As shown in Figure 4A, at lower temperatures the reaction between the hydrate and $SO_2$ in the gas is slower, whereas at higher temperatures the chemistry favors the dehydration of the calcium hydroxide into quicklime (CaO), and the reaction of the hydrate with carbon dioxide ($CO_2$) in the gas to form $CaCO_3$, neither of which products are significantly reactive with $SO_2$ at these temperatures. Typically, 25 to 40 percent of the calcitic content of the sorbent is sulfated, or "utilized," when using commercially available hydrates. However, the utilization can be increased by injecting sorbents with very high surface area and/or porosity. Thus, the FERCo 12 sorbent in Figure 4B was specially produced to yield a specific surface area of 38 $m^2/g$, whereas the commercial Longview calcitic hydrate used had a specific surface area of 18 $m^2/g$.

To achieve maximum utilization of the sorbent, it must be introduced in such a fashion that it rapidly becomes uniformly mixed with the combustion gases. Because the temperature window for sorbent injection according to the present invention is within the range where ordinary steel can survive for long periods, in one modification, one may introduce the sorbent from tubes that penetrate into the duct containing the flow of gases, if needed to obtain a uniform mixture of the sorbent with the combustion gases.

In one preferred embodiment, the sorbent may be injected as an aqueous solution or particulate suspension to increase the momentum of the injected sorbent for increased penetration into the duct containing the flue gas, to improve mixing of the sorbent with the flue gas, or to allow sorbent injection at temperatures above the optimum, if required by the physical constraints of the application. In addition, slaking of a quicklime (i.e., hydration in an excess of water), which could be used to produce an aqueous solution of the hydrated sorbent, may also produce a higher surface area, and hence more reactive, sorbent than commercial hydration processes. Although this embodiment (injection as an aqueous solution or particulate suspension), which may apply the process described in U.S. Pat. No. 4,555,996 (for injection above 1204°C (2,200°F)) to these lower temperatures, may facilitate the engineering design of the present invention for certain applications and/or may improve its effectiveness, the present invention does not depend materially on the use of an aqueous solution to introduce the sorbent.

At the optimum injection temperature for calcium hydroxide i.e., 427° - 649°C (800° - 1200°F) as discussed above, the majority of the unsulfated and uncarbonated sorbent remains as calcium hydroxide (see Figure 4A showing substantial $Ca(OH)_2$ remaining and very low levels of CaO below 538°C (1,000°F)). Injection of hydrate into this temperature regime differs from injection of hydrates or carbonates into the higher temperature regime in that the unreacted material is in the form of a hydrate instead of an oxide (i.e., CaO or CaO.MgO). This provides an opportunity for additional reduction of the sulfur in the gas further downstream. As is known to those skilled in the art, commercial spray dryer technology and other experiences demonstrate that calcium hydroxide reacts readily with $SO_2$ in flue gas if the gas is cooled and humidified to within 17° to 28°C (30° to 50°F) of the water saturation point (typically 57,3°C (135°F) in the absence of $SO_3$). This humidity condition can be made to occur in the ductwork upstream of the particulate collection device, where flue gas temperatures are below 177°C (350°F), by introducing fine water droplets through spray nozzles inserted into the duct.

As with other sorbent injection processes, the product of these reactions is a dry particulate that can be captured by the combustion system's particulate collection device.

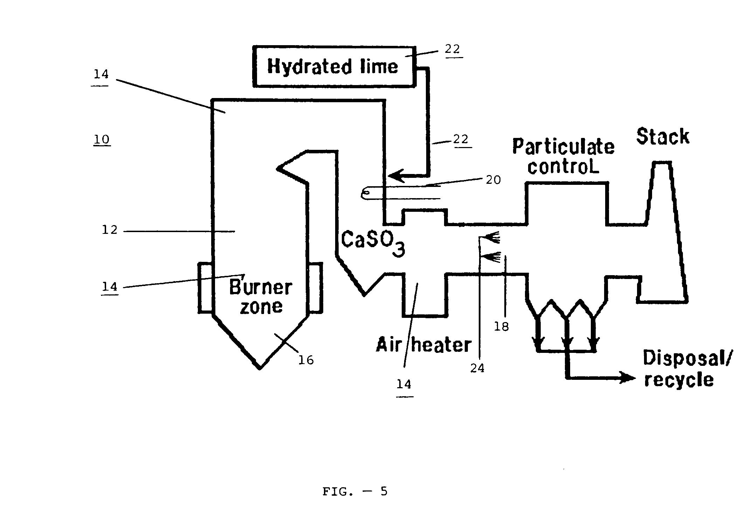

Referring again now to the drawings, and to figure 5 in particular, there is shown a combustion chamber 10 including housing 12 defining a combustion volume 14 which includes a burner zone 16 and an exhaust zone 18. The combustion chamber 10 is adapted to burn fossil fuels so as to provide temperatures of approximately 1538°C (2800°F) at the burner zone 16 decreasing to 66°C (150°F) at the exhaust zone 18. Combustion chamber 10 further includes economizer 20 and injection means 22 for injecting alkali hydrate sorbent into combustion volume 14 at a location between burner zone 16 and exhaust zone 18 where the temperature is in the range of 427° - 649°C (800° - 1200°F). Economizer 20 is preferably located at an area where the temperature is about 538°C (1,000°F) during operation of the chamber. Injection of alkali hydrate sorbent into the combustion gases at this location provides for a predetermined chemical reaction of the alkali hydrate sorbent and $SO_2$ such that a majority of the sulfated sorbent is alkali sulfite and a majority of the unreacted sorbent remains as alkali hydroxide. Water or steam injection through spray nozzles 24 may be used to obtain further reaction of the sorbent with the residual $SO_2$.

Referring to Figure 2 there is shown another embodiment of a combustion chamber constructed according to the present invention. Combustion chamber 30 is defined by a housing 31 which defines a combustion volume 32 which is also the burner zone and an exhaust zone 33. The combustion chamber 32 is adapted to burn coal and provides temperatures of approximately 1538°C (2,800°F) decreasing to 66°C (150°F) or less in the exhaust zone 33. The exhaust zone 33 also includes convective banks 34A and 34B, which may be, for example, first and second portions of an economizer used to cool the combustion gases to provide a desired temperatures. The alkali hydrate sorbent may be injected into combustion volume 32 by means of injection ports 35A through E to provide for sorbent injection where the temperature range is approximately 427° - 649°C (800° - 1200°F). As the combustion gases exit the combustion zone 32, the gases gradually become cooler. In the area near ports 35, given the design of this combustion chamber, the gases are approximately at 649°C (1,200°F). Likewise near port 35E, the gases are approximately at 427°C (800°F). In general maximum sorbent utilization is experienced at injection port 35C, where the gases are approximately 538°C (1000°F). Specific variations and consistencies of sorbent, however, can be expected to result in maximum utilization at one or more of the injection ports 35A through 35E within the temperature range of 427° - 649°C (800° - 1200°F).

The following examples are provided for purposes of illustration, but are not intended to limit the invention by any means or in any manner.

EXAMPLE 1

A pressure-hydrated dolomite is injected into a pilot-scale combustor that simulates the configuration shown in Figure 5. The percent $SO_2$ removal from the combustion gases (coal) is plotted in Figure 1 versus the sorbent injection temperature. The sorbent is injected at various locations throughout the combustor and superheater, economizer and air heater. As the combustion gases flow from the burner zone to the air heater the temperature of the gases gradually decreases. It will be noted, however, that the reactivity of the injected sorbent at various temperatures is not constant and of particular note is a peak of sorbent activity around 538°C (1,000°F), which phenomenon was discovered by the applicants and is exploited according to the teachings of the invention.

EXAMPLE 2

The temperature-time history of combustion flue gases in a typical 600 MW coal-fired boiler in the region surrounding the middle peak of reactivity of the curve of Figure 1 is tested by putting the boiler under three sets of coditions. The temperature-time histories under these three sets of conditions are shown in Figure 3. The solid lines indicate the temperature-time histories of the combustion gases of the 600 MW coal-fired combustor under 100% load and 60% load respectively. The dash curve shows the temperature time history of the combustion gases in the modified pilot-scale boiler simulator shown in Figure 2. Three different sorbents were injected at a zone in this pilot-scale combustor where the gases are approximately 538°C (1,000°F). The graph in Figure 4B shows the amount of sulfur dioxide removed from the combustion flue gases of each of the different sorbent materials injected at three different temperatures as indicated.

Although these examples and the invention are described above in terms of a combustion chamber, the invention is not to be considered so limited, but rather is broadly applicable to any controlled gaseous volume containing sulfur dioxide, wherein it is desirable to reduce or eliminate the sulfur dioxide from the controlled volume.

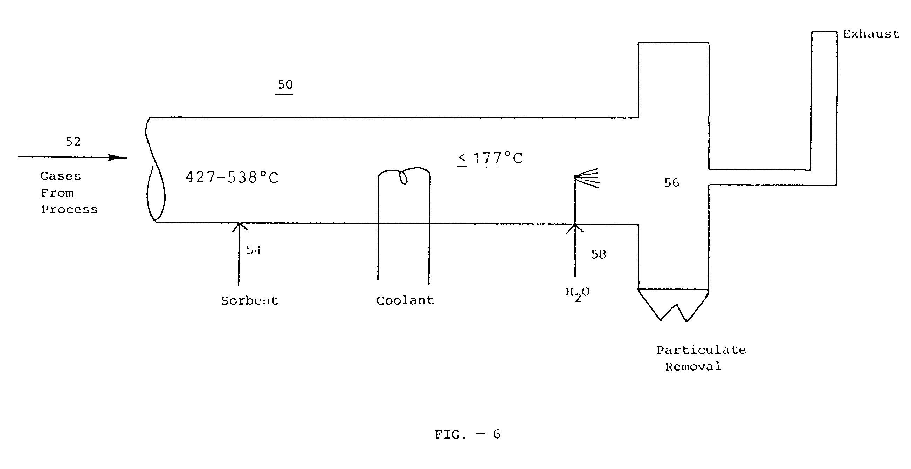

Referring now to figure 6 there is shown a schematic view of gas chamber 50 enveloping a predetermined controlled gaseous volume 52 which gaseous volume contains sulfur dioxide. Gas chamber 50 includes injection port 54 for introducing alkali sorbent to gaseous volume 52 and particulate removal device 56 for removing alkali sulfite and unsulfated sorbent from gaseous volume 52. In operation gaseous volume 52 would be brought to the favorable temperature range 427° - 649°C (800° - 1200°F) as taught by the invention, and the alkali sorbent would be injected through injection port 54. Subsequently, the temperature of gaseous volume 52 would be reduced to the 38° - 177°C (100° - 350°F) range by cooling and/or humidification (using water spray nozzles 58) to provide for further reduction of the $SO_2$ by the reaction of the alkali hydroxide and $SO_2$ as explained supra. The formed alkali sulfite would then be removed by removal device 56 along with the unsulfated sorbent and any other particulate present in gaseous volume 52.

**Claims**

1. A process for reducing the sulfur content of a sulfur-containing volume of gas comprising the steps of injecting a dry powdered alkali hydrate sorbent into said sulfur-containing gas while the temperature of said gas is maintained between 430 - 650°C (800° - 1200°F) such that said alkali sorbent combines with said $SO_2$ to form alkali sulfite and the unreacted sorbent remains substantially as alkali hydroxide.

2. The process according to claim 1, characterized by said dry powdered sorbent being selected from the group consisting of calcium hydrate, magnesium hydrate, dolomitic hydrate and mixtures thereof.

3. The process according to Claim 1 wherein said sorbent is injected coflowing with said combustion gas.

4. The process according to Claim 1 wherein said sorbent is injected counterflowing with said combustion gas.

5. The process according to Claim 1 wherein said sorbent is injected cross-flowing with said combustion gas.

6. The process according to Claim 1 further including the steps of reducing the temperature of said volume of gas to the 65° - 177°C (150° - 350°F) temperature range and humidifying the mixture comprising alkali sulfite, alkali hydroxide and said gas to provide for further reduction of $SO_2$ by means of the reaction of said alkali hydroxide with remaining $SO_2$.

7. The process according to Claim 1 wherein said sorbent is injected into said sulfur-containing gases as an aqueous solution or particulate suspension.

8. A combustion chamber, comprising:
   a housing defining a combustion volume which includes a burner zone and an exhaust zone, and
   injection means for injecting sulfur-removing sorbent into said combustion volume at one or more locations between said burner zone and exhaust zone where the temperature in said location during operation of said chamber is in the range of 430° - 650°C (800° - 1200°F).

9. The combustion chamber according to Claim 8 wherein said housing includes an economizer having first and second portions and said injection means is located between said first and second portions of said economizer where the temperature during operation of said chamber is approximately 540°C (1000°F).

**Patentansprüche**

1. Verfahren zum Verringern des Schwefelgehaltes eines schwefelenthaltenden Gasvolumens mit den Schritten: Injizieren eines trockenen, pulverisierten Alkalihydratsorptionsmittels in das schwefelenthaltende Gas, während die Temperatur des Gases zwischen 430 - 650°C (800° - 1200°F) gehalten wird, derart, daß das Alkalisorptionsmittel sich mit $SO_2$ zur Bildung von Alkalisulfit verbindet und das unreagierte Sorptionsmittel im wesentlichen als Alkalihydroxid übrigbleibt.

2. Verfahren nach Anspruch 1, dadurch gekennzeichnet, daß das trockene pulverisierte Sorptionsmittel aus der Gruppe gewählt ist, die aus Calziumhydrat, Magnesiumhydrat, Dolomithydrat und Gemischen daraus besteht.

3. Verfahren nach Anspruch 1, bei dem das Sorptionsmittel in einem Mitstrom mit dem Verbrennungsgas injiziert wird.

4. Verfahren nach Anspruch 1, bei dem das Sorptionsmittel im Gegenstrom zum Verbrennungsgas injiziert wird.

5. Verfahren nach Anspruch 1, bei dem das Sorptionsmittel in einem Querstrom zum Verbrennungsgas injiziert wird.

6. Verfahren nach Anspruch 1 mit den weiteren Schritten: Herabsetzen der Temperatur des Gasvolumens auf den Temperaturbereich von 65° - 177°C (150° - 350°F) und Befeuchten des Gemisches aus Alkalisulfit, Alkalihydroxid und dem Gas, um für eine weitere Verringerung von $SO_2$ mittels der Reaktion des Alkalihydroxids mit dem verbleibenden $SO_2$ zu sorgen.

7. Verfahren nach Anspruch 1, bei dem das Sorptionsmittel in die schwefelenthaltenden Gase als wässrige Lösung oder als Teilchensuspension injiziert wird.

8. Verbrennungskammer mit einem Gehäuse, das ein Verbrennungsvolumen begrenzt, das eine Brennerzone und eine Abgaszone einschließt, und einer Injektionseinrichtung zum Injizieren eines schwefelentfernenden Sorptionsmittels in das Verbrennungsvolumen an einer oder mehreren Stellen zwischen der Brennerzone und der Abgaszone, wobei die Temperatur an dieser Stelle während des Betriebes der Kammer im Bereich von 430° - 650°C (800° - 1200°F) liegt.

9. Verbrennungskammer nach Anspruch 8, bei der das Gehäuse einen Abgasvorwärmer mit einem ersten und einem zweiten Teil enthält und die Injektionseinrichtung zwischen dem ersten und dem zweiten Teil des Abgasvorwärmers angeordnet ist, wo die Temperatur während des Betriebes der Kammer bei annähernd 540°C (1000°F) liegt.

**Revendications**

1. Un procédé pour réduire la teneur en soufre d'un volume de gaz renfermant du soufre, comportant les étapes d'injecter un sorbant alcalin hydraté sous forme de poudre sèche dans ledit gaz renfermant du soufre tandis que la température dudit gaz est maintenu entre 430 et 650°C (800-1200°F) de façon que ledit sorbant alcalin se combine avec ledit $SO_2$ afin de former un sulfite alcalin et que le sorbant n'ayant pas réagi reste essentiellement sous forme d'hydroxyde alcalin.

étant approximativement de 540°C (1000°F).

2. Le procédé selon la revendication 1, caractérisé par le fait que ledit sorbant pulvérulent sec est choisi dans le groupe constitué par l'hydrate de calcium, l'hydrate de magnésium, l'hydrate dolomitique ainsi que des mélanges de ceux-ci.

3. Le procédé selon la revendication 1 dans lequel ledit sorbant est injecté en co-courant avec ledit gaz de combustion.

4. Le procédé selon la revendication 1 dans lequel ledit sorbant est injecté à contre-courant par rapport audit gaz de combustion.

5. Le procédé selon la revendication 1, dans lequel ledit sorbant est injecté en courant croisé avec ledit gaz de combustion.

6. Le procédé selon la revendication 1, comportant en outre des étapes de réduire la température du volume de gaz dans la gamme de températures de 65 à 177°C (150-350°F) et à humidifier le mélange comportant le sulfure alcalin, l'hydroxyde alcalin et ledit gaz afin de procurer une réduction supplémentaire de $SO_2$ au moyen de la réaction dudit hydroxyde alcalin avec le $SO_2$ restant.

7. Le procédé selon la revendication 1, dans lequel ledit sorbant est injecté dans lesdits gaz renfermant du soufre sous la forme d'une solution aqueuse ou d'une suspension de particules.

8. Une chambre de combustion, comportant:
   - une enceinte délimitant un volume de combustion qui comporte une zone de combustion et une zone d'évacuation, et
   - des moyens d'injection pour injecter le sorbant éliminant le soufre dans ledit volume de combustion en un ou plus d'un endroit entre ladite zone de combustion et ladite zone d'évacuation, la température en cet endroit, pendant le fonctionnement de ladite chambre, se situant dans la gamme de 430 à 650°C (800-1200°F).

9. La chambre de combustion selon la revendication 8, dans laquelle ladite enceinte comporte un économiseur présentant des première et seconde parties et ledit moyen d'injection est disposé entre lesdites première et seconde parties dudit économiseur, la température pendant le fonctionnement de ladate chambre

FIG. — 1

## (hydrated dolomitic lime, Ca/s=1)

Percent SO$_2$ Removal

| Burner zone | Upper-furnace | Superheater/reheater | Econ | Air heater | T$_{sat}$ |

Furnace Sorbent Injection

Sulfite mode

Low temp capture

100

80

60

40

20

0

1649    1371    1093    816    538    260    −18

Sorbent Injection Temperature,$^\circ$ C

Coal        Air

30

31

32

649°C

35A

35B        34A

35C

33

35D        34B

35E

427°C        33

FIG. — 2

A-B  Low Temperature Superheater
B-C  Cavity
C-D  Economizer

FIG. - 3

11

FIG. — 4A

Commercial hydrated dolomite (Genstar) (by Genstar Corp., Canada)
Commercial hydrated lime (Longview)   (by Radcliff Materials, Inc., U.S.A.)
High area hydrated lime  (FERCo 12)    (by Fossil Energy Research Corp., U.S.A.)

FIG. — 4B

FIG. — 5

EP 0 250 878 B1

Gases From Process 52

50

427–538°C

54 Sorbent

Coolant

$\le 177°C$

$H_2O$ 58

56

Particulate Removal

Exhaust

FIG. — 6

EP 0 250 878 B1